# EUROPEAN PATENT SPECIFICATION

(11) **EP 4 360 177 B1**
(45) Date of publication and mention of the grant of the patent: **29.04.2026**
(21) Application number: 22747367.5
(22) Date of filing: 22.06.2022
(51) Int. Cl.: H02G 9/04

(54) **ELECTRIC VEHICLE CHARGING ARRANGEMENT**
LADEANORDNUNG FÜR ELEKTROFAHRZEUG
AGENCEMENT DE CHARGE DE VÉHICULE ÉLECTRIQUE

(30) Priority: 22.06.2021 GB 202108957
(43) Date of publication of application: 01.05.2024
(73) Proprietor: Electrica Live (UK) Limited, London EC1A 9ET (GB)
(72) Inventor: BIBB, Christopher, St John's Hill Shrewsbury SY1 1JJ (GB); PATERSON, John, Cambridgeshire PE28 5UT (GB)
(74) Representative: Keltie LLP
(86) International application number: PCT/GB2022/051593
(87) International publication number: WO 2022/269255

(56) References cited:
- WO-A1-2013/053368
- WO-A1-2019/016531
- WO-A2-2013/034872
- CN-U- 211 266 341

## Description

### FIELD OF THE INVENTION

The invention relates generally to the field of electric vehicles, and more specifically to an arrangement for charging electric vehicles.

### BACKGROUND

Providing access to on-street charging is a significant barrier to the wide-scale adoption of electric vehicles and has been described as the major issue slowing the transition from vehicles powered by internal combustion engines. Electric vehicle owners with homes that do not have driveways or garages, must charge their vehicle while parked on the street. The presence of the charging cable across the pavement or sidewalk creates a trip hazard for pedestrians and other pavement users.

Attempts have been made to provide roadside charging units that alleviate this issue. However, the building work to install these charging units and connect them to the grid requires approval from local authorities, creating significant delays. In addition, these solutions often require a minimum number of units per street to be financially viable, with parking space denied to residents who do not yet have an electric vehicle. This leads to objections from residents and increased difficulty in obtaining approval from local authorities.

WO 2019/016531 A1 discloses an arrangement that allows easy access to a charging cable for an electric vehicle that also aims to protect pedestrians from a trip hazard. The arrangement of WO 2019/016531 A1 provides a duct placed in a slot in the pavement or sidewalk which is covered such that a closed passage is defined in which the vehicle charging cable can be received. The arrangement may also comprise a slidable tray to provide easy access to the plug of the charging cable for a user.

It is against this background that this invention has been devised.

### SUMMARY OF THE INVENTION

According to a first aspect of the invention, there is provided an arrangement for providing a charging connection for an electric vehicle. The arrangement comprises an elongate groove formed in a surface of a pavement or sidewalk and a conduit received within the elongate groove, the conduit comprising: an outer sleeve comprising a first open channel defining a first longitudinal aperture; and an inner sleeve arranged within the first open channel, the inner sleeve comprising a second open channel for receiving a vehicle charging cable. The second open channel defines a second longitudinal aperture. The conduit has an open state and a closed state. In the open state, the first and second longitudinal apertures are mutually aligned so that the conduit defines an opening at the surface of the pavement or sidewalk, through which at least a portion of the vehicle charging cable may be inserted into the second open channel of the conduit. In the closed state, an exposed surface of the conduit at the surface of the pavement or sidewalk covers the vehicle charging cable. The inner sleeve of the conduit is rotatable within the outer sleeve to move the conduit between the open and closed states.

Moving the conduit from the closed state to the open state may reveal the opening at the surface of the pavement or sidewalk.

The exposed surface of the conduit may be a surface of the inner sleeve and may be a surface of the inner sleeve that is diametrically opposed to the second slot. The exposed surface of the conduit may be substantially flush with the surface of the pavement or sidewalk when the conduit is in the closed state.

The inner sleeve may rest against a bearing arrangement in the outer sleeve. The bearing arrangement may comprise roller bearings against which the inner sleeve rotates to move the conduit between the open and closed states.

The inner sleeve may be supported by an elastically resilient member. The elastically resilient member may comprise a spring. The elastically resilient member may alternatively comprise an elastomeric material.

The conduit may comprise a base structure received within the groove. The outer sleeve may be integral with the base structure, for example being formed integrally with the base structure. The base structure may be formed from rubber or another resiliently deformable material. The base structure may comprise an outwardly-extending skirt. The skirt may be covered by an infill.

The groove and the conduit may extend transversely across the width of the pavement or sidewalk. The groove and the conduit may extend between a domestic residence on one side of the pavement or sidewalk and a road providing on-street parking on the other side of the pavement or sidewalk. **The** groove in the pavement or sidewalk may be a shallow groove and may have a depth of approximately 80 mm or less, preferably 70 mm or less.

**The** outer and/or the inner sleeve may be extruded parts and may be made of plastic, metal, or a composite material such as fibre-reinforced polymer. **The** outer and/or the inner sleeve may be plastic extrusions or aluminium extrusions. **The** outer and/or inner sleeve may alternatively be formed by casting.

According to a second aspect of the invention, there is provided a method of installing an arrangement for providing a charging connection to an electric vehicle. **The** method comprises forming an elongate groove within a pavement or sidewalk and providing a conduit in said groove. The conduit comprises: an outer sleeve comprising a first open channel defining a first longitudinal aperture; and an inner sleeve arranged within the first open channel, the inner sleeve comprising a second open channel for receiving a vehicle charging cable, the second open channel defining a second longitudinal aperture, wherein the inner sleeve is rotatable within the outer sleeve to move the conduit between open and closed states, and wherein the first and second longitudinal apertures are mutually aligned when the conduit is in the open state. The method may comprise forming the groove to a depth of 80 mm or less.

The conduit may comprise a base structure and the method may further comprise installing the base structure within the groove and subsequently installing the inner sleeve within the base structure.

According to a third aspect of the invention, there is provided a method for charging an electric vehicle using the arrangement discussed above. The method comprises: providing a charging cable; rotating the inner sleeve of the conduit within the outer sleeve of the conduit to move the conduit to the open state and reveal the opening defined at the surface of the pavement or sidewalk by mutual alignment of the first and second longitudinal apertures; inserting a portion of the charging cable into the second open channel of the conduit through the opening; closing the conduit by rotating the inner sleeve within the outer sleeve such that an exposed surface of the conduit at a surface of a pavement or sidewalk covers said portion of the vehicle charging cable; connecting a first end of the charging cable to a power supply; and connecting a second end of the charging cable to the electric vehicle.

The power supply may be a domestic power supply. The electric vehicle may be parked on a road.

In any of the above examples, the conduit may comprise a biasing mechanism, for example a spring, to bias the conduit into the closed state. The conduit may comprise means for automatically moving the conduit between the open and closed states. The means for automatically moving the conduit between the open and closed states may comprise a motor or other suitable drive means. The means for automatically moving the conduit between the open and closed states may be remotely operable.

Optional features described above in relation to any one aspect of the invention are equally applicable to the other aspects of the invention. Repetition of such features is avoided purely for reasons of conciseness.

### BRIEF DESCRIPTION OF THE DRAWINGS

So that it may be more readily understood, the invention will now be described with reference to the following drawings, in which:
Figure 1 shows an arrangement for charging an electric vehicle comprising a cross-pavement conduit for accommodating a charging cable;
Figure 2 is a cross-sectional view of an outer sleeve of the conduit used in the arrangement of Figure 1;
Figure 3 is a cross-sectional view of an inner sleeve of a conduit used in the arrangement of Figure 1;
Figure 4 is a cross-sectional view of the conduit embedded in the pavement, wherein the conduit is in an open state;
Figure 5 is a cross-sectional view of the conduit embedded in the pavement, wherein the conduit is in a closed state;
Figure 6 is a cross-sectional view of an alternative arrangement for charging an electric vehicle, in which the conduit comprises a base structure;
Figure 7 shows a cross-sectional view of another alternative arrangement for charging an electric vehicle, in which the outer sleeve of the conduit is formed integrally with the base structure of the conduit;
Figure 8 shows a cross-sectional view of a further alternative arrangement for charging an electric vehicle, in which the inner sleeve of the conduit rests against a bearing arrangement;
Figure 9 shows a plan view of a base structure for the conduit of Figures 7 or 8 comprising a series of skirt sections; and
Figures 10a and 10b show perspective and plan views respectively of a base structure for the conduit of Figures 7 or 8 comprising a series of cavities.

### DETAILED DESCRIPTION

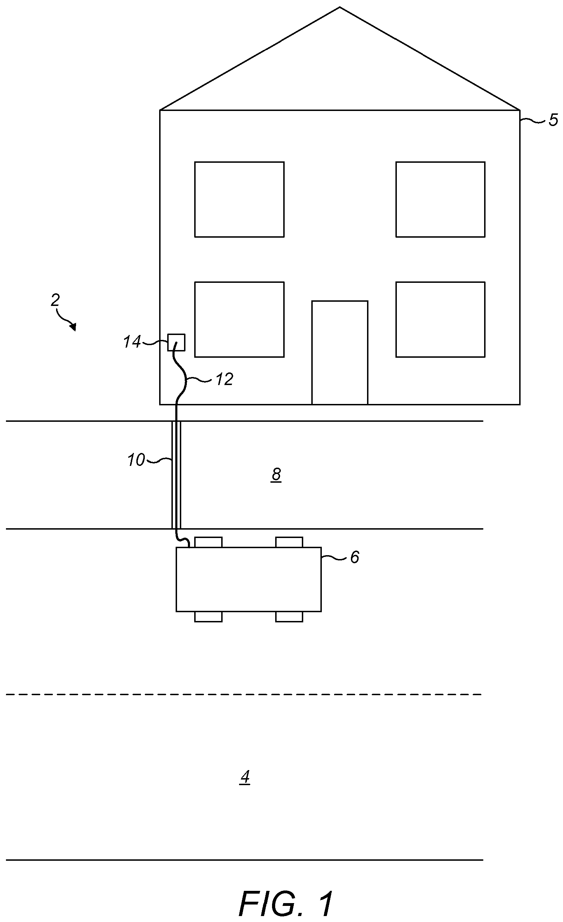

Figure 1 schematically shows a section of a residential street 2 that includes a road 4, a domestic residence 5 and an electric vehicle 6. As can be seen in Figure 1, the domestic residence 5 lacks off-street parking and so the electric vehicle 6 is seen parked on the road 4, in front of the domestic residence 5. Between the domestic residence 5 and the road 4 is a pavement (or sidewalk, or other pedestrian footway) region 8. An elongate conduit 10 is embedded within the pavement 8. The conduit 10 extends transversely across the width of the pavement 8. The conduit 10 receives a portion of a charging cable 12 that provides a charging connection to the electric vehicle from a power supply 14 associated with the domestic residence 5.

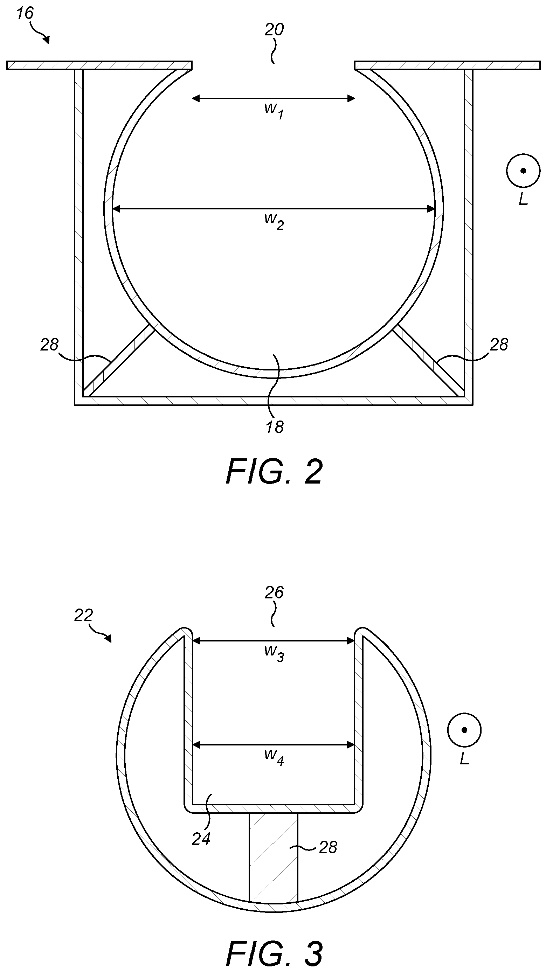

The conduit 10 will now be described in more detail with reference to Figures 2 and 3. The conduit comprises an outer sleeve 16 and an inner sleeve 22, shown in Figures 2 and 3, respectively.

The outer sleeve 16 is elongate and extends along a longitudinal axis L that is normal to the plane of the page in Figure 2. As can be seen in Figure 2, the outer sleeve 16 is generally rectangular in a transverse cross-section normal to the longitudinal axis L. The outer sleeve 16 comprises a first open channel 18, which extends longitudinally along the length of the outer sleeve 16. The first open channel 18 comprises a first longitudinally extending slot or aperture 20 that provides access to the first channel 18. The first channel 18 is substantially cylindrical in shape and is shown to have a substantially circular cross-section in Figure 2. It will be appreciated that the substantially circular cross-section of the first channel 18 means that the first aperture 20 has a width *w*₁ that is narrower than a width *w*₂ of the first channel 18 at its widest point. The first aperture 20 extends over an angular range between approximately eleven o'clock and one o'clock in this example.

The inner sleeve 22 is, like the outer sleeve 16, elongate along a longitudinal axis L. The inner sleeve is substantially cylindrical in shape and is shown to have a substantially circular cross-section in Figure 3. The inner sleeve 22 comprises a second open channel 24, which extends longitudinally along the length of the inner sleeve 22. The second channel 24 comprises a second longitudinally extending slot or aperture 26 that provides access to the second channel 24. In this example, the second channel 24 is substantially rectangular in cross-section, so that the width *w*₃ of the second aperture 26 is substantially equal to the width *w*₄ of the second channel 24. The second channel 24 may have other suitable shapes in other examples.

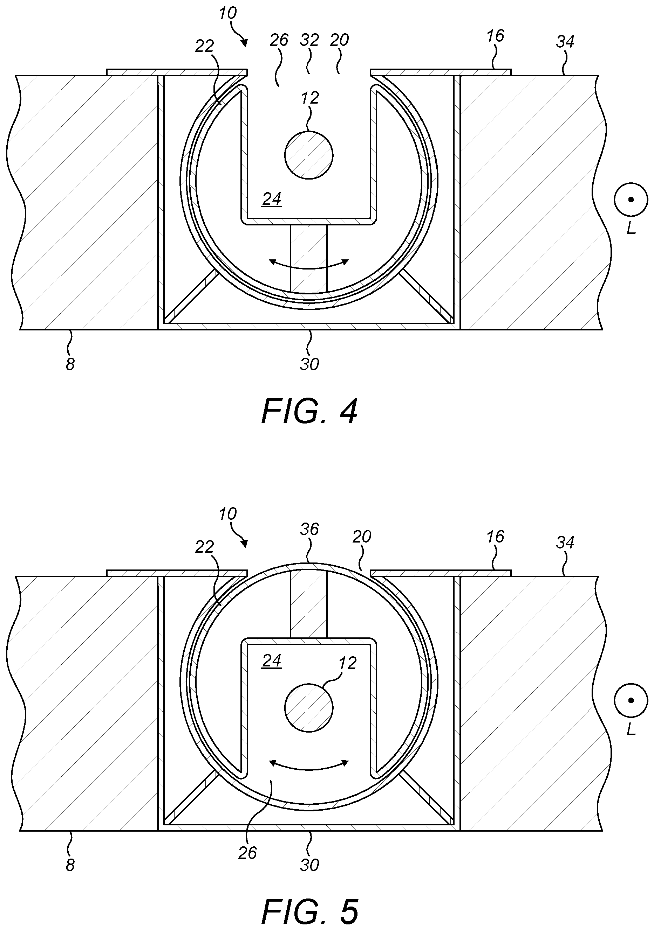

The inner sleeve 22 is configured to be received within the first channel 18 (as shown in Figures 4 and 5) such that the inner sleeve 22 is coaxial with the outer sleeve 16. When received within the first channel 18, the inner sleeve 22 is configured to be rotatable within the first channel 18 about the longitudinal axis L to vary the orientation of the second aperture 26 with respect to the first aperture 20. The inner sleeve 22 is retained within the first channel by the relative narrowness of the first aperture 20 when compared to the first channel 18 and inner sleeve 22 at their widest points.

The inner sleeve 22 is configured to receive a charging cable 12 within the second channel 24. The second channel 24 is deep enough and wide enough that standard cables for charging electric vehicles may be received therein completely, without the cable 26 protruding beyond the second aperture 26.

In preferred embodiments of the invention, the outer sleeve 16 and the inner sleeve 22 are plastic extrusions or aluminium extrusions. This enables the conduit 10 to be cost effective to manufacture yet durable in use. Alternatively, the outer sleeve 16 and inner sleeve 22 may be made from stainless steel or other suitably tough and durable material.

As can be seen in Figures 2 and 3, the outer sleeve 16 and the inner sleeve 22 may be substantially hollow extrusions that are supported by elongate ribs 28 that extend along the length of the outer sleeve 16 or inner sleeve 22, respectively. The ribs 28 enable the use of less material when forming the conduit 10, yet ensure that the outer sleeve 16 and inner sleeve 22 are strong enough to withstand long periods of use.

Figures 4 and 5 show cross-sections of the conduit 10 when embedded in the pavement 8. In both cases, the conduit 10 is embedded in a shallow, elongate groove 30 that is formed in the pavement 8. The outer sleeve 16 and the groove 30 in the pavement 8 are configured to be of a similar width and depth so that the conduit 10 fits snugly in the groove 30 when embedded therein. In other words, the external dimensions of the outer sleeve 16 are similar to the internal dimensions of the groove 30.

In the arrangement shown in Figure 4, the conduit 10 is arranged in an open state, wherein the second aperture 26 is aligned with the first aperture 20. When the conduit 10 is embedded in the groove 30 in the pavement 8 and is in the open state, the mutual alignment of the first and second apertures 20, 26 defines an opening 32 in the arrangement at a surface 34 of the pavement 8. The opening 32 therefore provides access to the second channel 24.

In contrast to the arrangement shown in Figure 4, Figure 5 shows the conduit 10 when arranged in a closed state. In the closed state, the inner sleeve 22 is positioned within the outer sleeve 16 such that the first and second apertures 20, 26 are diametrically opposed. When the conduit 10 is embedded in the groove 30 in the pavement 8 and is in the closed state, an exposed surface 36 of the inner sleeve 22 that is substantially diametrically opposed to the second aperture 26 is substantially flush with the surface 34 of the pavement 8. The exposed surface 36 therefore prevents access to the second channel 24.

The conduit 10 is movable between the open and closed states by rotation of the inner sleeve 22 within the outer sleeve 16. Rotation of the inner sleeve 22 brings the second aperture 26 into and out of mutual alignment with the first aperture 20, revealing and concealing the opening 32 when the conduit 10 is received within the groove 30 in the pavement 8. Moving the conduit 10 to the open state may be referred to as 'opening' the conduit 10, while moving the conduit 10 to the closed state may be referred to as 'closing' the conduit 10. Movement of the conduit 10 between the open and closed states may be actuated by knurled bezels (not shown) that are situated at one or both ends of the inner sleeve 22. Alternatively, movement of the conduit 10 between the open and closed states may be actuated by direct manipulation of the inner sleeve 22.

When the conduit 10 is in the open state, the second channel 24 can receive part of a charging cable 12 via insertion of the cable 12 through the opening 32. The conduit 10 can then be closed through rotation of the inner sleeve 22 within the outer sleeve 16 such that the exposed surface 36 of the inner sleeve 22 covers and conceals the charging cable 12. This prevents the cable 12 from presenting a trip hazard across the pavement 8. The fact that the exposed surface 36 is substantially flush with the surface 34 of the pavement 8 means that the conduit 10 itself does not present a trip hazard to pedestrians using the pavement 8.

In alternative embodiments of the invention, the conduit 10 may comprise a flap or panel to cover and conceal the charging cable 12. The conduit 10 may be transitioned between the open and closed states by sliding the flap or panel over the second channel 24. Alternatively, the conduit 10 may be transitioned between the open and closed states by the action of a hinge mechanism positioned along one side of the flap or panel. Regardless of the exact mechanism used to cover the charging cable 12, or to transition the conduit 10 between the open and closed states, the conduit 10 may also include a biasing mechanism, for example a spring, that biases the conduit 10 into the closed state. The conduit 10 may also include means for automatically transitioning the conduit 10 between the open and closed states, such as a motor. Such means may be operable remotely.

The invention also extends to a method for charging an electric vehicle using the apparatus described above. A charging cable 12 is provided and, with the conduit 10 in the open state, or opened by rotating the inner sleeve 22 within the outer sleeve 16 such that the opening 32 is revealed, the cable 12 is inserted into the second channel 24 of the conduit 10 through the opening 32. The conduit 10 is then closed by rotating the inner sleeve 22 within the outer sleeve 16 such that the exposed surface 36 of the conduit 10 is substantially flush with the surface 34 of the pavement 8. The exposed surface 36 covers and conceals the cable 12 within the second channel 24 such that it does not present a trip hazard to pedestrians on the pavement 8. The cable 12 is then connected to a power supply 14 at a first end and to the electric vehicle 6 at a second end, enabling a charging connection to be made between the power supply 14 and the electric vehicle 6.

The power supply 14 may be a domestic power supply and may conveniently include a socket located external to the domestic residence 5, as shown in Figure 1. Alternatively, a socket may be located inside the domestic residence 5.

In certain embodiments of the invention, the conduit 10 may be provided as a modular unit. In such cases, the outer sleeve 16 and/or the inner sleeve 22 may be provided as multiple outer sleeve elements and/or inner sleeve elements. This enables the conduit 10 to be fitted to various different widths of pavement 8.

The apparatus and method described above enable a resident who does not have access to off-street parking (such as a garage or driveway) to charge an electric vehicle parked on the road adjacent to their house without the charging cable presenting a trip hazard to pedestrians who may be using the pavement. It is estimated that 43% of households in the UK do not currently have access to off-street parking. Furthermore, by enabling connection to the resident's domestic power supply, the cost of charging the electric vehicle is significantly reduced compared to third-party roadside charging, which may be up to six times more expensive. Reducing the running costs of an electric vehicle in this way helps mitigate one of the significant barriers to consideration of electric vehicles by consumers without access to off-street parking. By using a resident's domestic power supply, the apparatus can take advantage of the fact that the power supply is already individually monitored and billed, obviating the need for further administrative setup. Receiving the charging cable within the conduit also helps protect the charging cable, both from the outside environment and from theft by pedestrians.

The apparatus, being relatively simple and discreet, presents an opportunity to expand the current provision of on-street vehicle charging whilst causing minimal disruption to the urban landscape and to road users while the apparatus is installed. The groove 30 in the pavement 8 may be formed to a depth of at most 80 mm, but is preferably formed to a depth of at most 70 mm, preferably between 50 and 60 mm, and more preferably to a depth of 55 mm. Ideally, the depth of the groove 30 is as shallow as possible. By forming the groove 30 at this depth, excavation of the groove 30 is quick and the apparatus is easy, cheap and quick to install. The limited depth of the groove 30 helps simplify the process of obtaining local approval since the groove will not interfere with existing subterranean pipes and cables, further expediting the installation process.

The fact that the apparatus is slim, simple, and relatively inexpensive allows for the possibility that it can be purchased by local authorities and subsequently installed where needed.

Without the need for a 'minimum order' for a street in order to qualify for installation of the apparatus, the provision of on-street vehicle charging can be individualised, further reducing the prospect of local objections from residents who do not yet own an electric vehicle.

The invention further extends to a method of installing the arrangement 10 described above. In a first step, a shallow, elongate groove 30 is formed within the pavement 8. The groove 30 may be formed by using a twin-bladed disc cutter to make parallel incisions a set distance apart to a maximum depth of 80 mm, preferably to a maximum depth of 70 mm. The area between the incisions is then excavated to a maximum depth of 80 mm, preferably to a maximum depth of 70 mm to provide a groove 30 that has a substantially constant depth of at most 80 mm, preferably 70 mm when measured from the surface 32 of the pavement 8. The conduit 10 is then received in the groove 30, where it is then ready to receive a charging cable 12 as described above.

The invention advantageously provides a permanent flush-fitting conduit affording safe passage of electric cables across a pavement or other pedestrian footway for the purpose of enabling on-street electric vehicle charging from an adjacent domestic electric vehicle charger and electricity supply.

The first channel 18 of the outer sleeve 16 may have a different shape to the circular cross-section exemplified above. For example, the first channel 18 may comprise a V-shaped cross-section in which the inner sleeve 22 is situated in order to reduce the number of points of contact between the inner sleeve 22 and the outer sleeve 16, and so reduce friction therebetween.

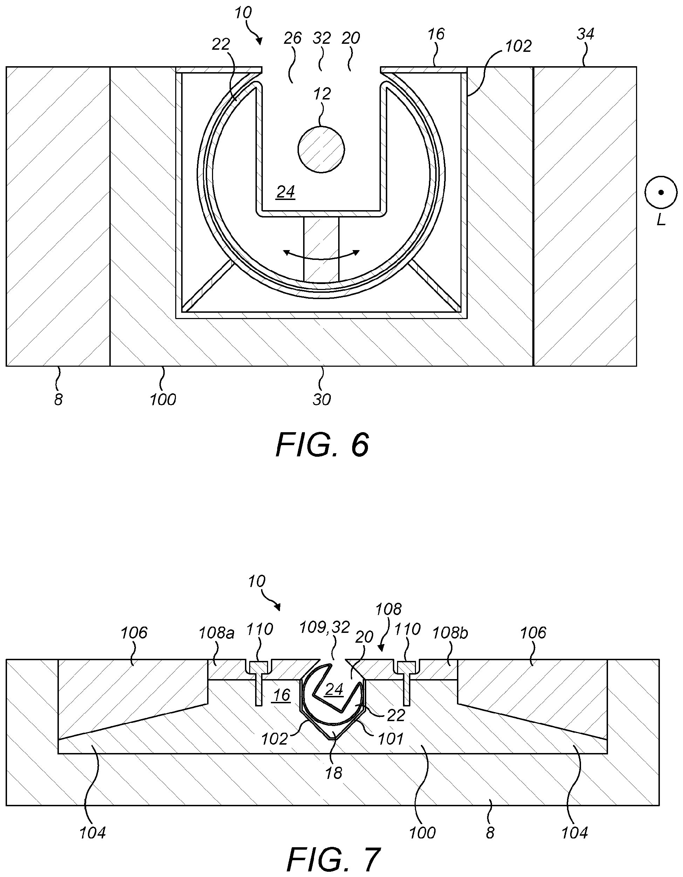

In addition, as shown in Figure 6, the conduit 10 may comprise a base structure 100, which may be provided separately to the outer sleeve 16 and the inner sleeve 22. The base structure 100 is situated within the pavement 8 such that the base structure 100 is positioned in the groove 30, with the outer sleeve 16 then received in a groove or slot 102 within the base structure 100. The base structure may be made from a suitably durable and resiliently deformable material, such as rubber. The base structure 100 enables loads applied to the conduit 10, such as from a vehicle temporarily mounting the pavement 8, to be spread and absorbed, thus protecting the outer sleeve 16 and inner sleeve 22 from damage.

The presence of the base structure 100 is also advantageous from an implementation perspective. Local authorities typically must formally adopt devices set into the highway or pavement and so bear maintenance costs and control access to the device. In this case, the local authority responsible for the road into which the conduit 10 is to be set can adopt the base structure 100 and install it in the pavement 8. The remaining parts of the conduit 10 can then be purchased by a resident and installed in the base structure 100 upon payment of a license or rental fee to the local authority.

Figure 7 shows an improved arrangement in which the outer sleeve 16 is integrally formed with the base structure 100. The slot 102 of the base structure 100 therefore defines the first open channel 18 and the first aperture 20 of the conduit 10, in the same way as described above. The first open channel 18, as discussed above, may comprise a V-shaped cross-section to reduce the number of points of contact between the first open channel 18 and the inner sleeve 22. In the case where the base structure 100 is made from a material with a relatively high co-efficient of friction, such as rubber, the slot 102 may be provided with a liner 101 to reduce friction between the inner sleeve 22 and the outer sleeve 16. Forming the outer sleeve 16 integrally with the base structure 100 reduces manufacturing cost and avoids the need to weld, or otherwise assemble the outer sleeve 16 from a number of different constituent parts.

The base structure 100 (and consequently the outer sleeve 16) of Figure 7 is significantly wider than the outer sleeve 16 of previous embodiments. This is in part due to the presence of a skirt 104 that extends outwardly from a central portion 103 of the base structure 100. The increased width of the base structure 100 increases the stability of the base structure 100, and thus the conduit 10, within the pavement 8. The skirt 104 is filled over with an infill 106, which can be asphalt or another suitable hard-wearing paving material. The infill 106 and the skirt 104 cooperate to hold the conduit 10 in place within the pavement 8. This helps to allay concerns of local authorities relating to future maintenance costs of the arrangement and improves the prospects for the arrangement to be considered for adoption by local authorities. The infill 106 can also be shaped, or haunched, in order to bridge the gap between the top of the conduit 10 and the pavement 8 in order to minimise any trip hazard if the surface of the pavement 8 is uneven.

The conduit further comprises a top cover 108, which can be secured in place using bolts 110, or another suitable fixture, such as a self-tapping screw. The top cover 108 may conveniently be split into two parts 108a, 108b, separated by a gap 109 to allow for insertion of a vehicle charging cable 12 into the conduit 10. In this way, the gap 109 functions in a similar way to the first aperture 20 described above in creating the opening 32 through which the vehicle charging cable 12 may access the second channel 24. The fact that the top cover 108 is removable means that when the inner sleeve 22 is not in place within the base structure 100, a blank cover that fully covers the slot 102 may instead be secured to the base structure 100 to protect the interior of the slot 102 (i.e., the first open channel 18) from damage.

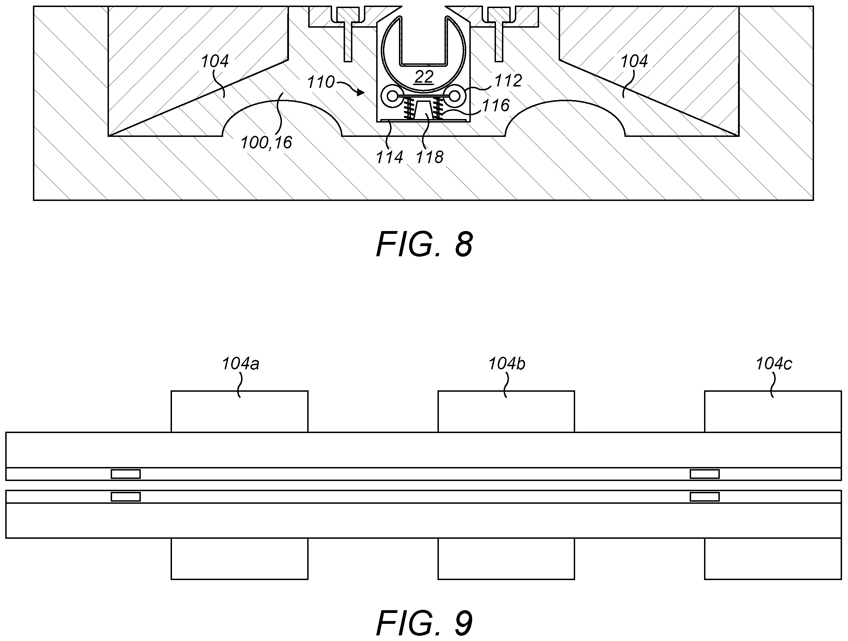

Figure 8 shows an alternative arrangement to that of Figure 7, in which the outer sleeve 16 is again integral with the base structure 100. In the embodiment of Figure 8, however, there is no liner 101 in place in the slot 102. In place of the liner 101, the inner sleeve 22 rests against, and is supported by, a bearing arrangement 110. A number of such bearing arrangements 110 may be present along the length of the arrangement in the longitudinal direction L. Each bearing arrangement comprises a pair of roller bearings 112. The inner sleeve 22 rests directly against the roller bearings 112 and is therefore rotatable between the open and closed states due to the rotating action of the roller bearings 112. The roller bearings further reduce the friction experienced in rotating the inner sleeve 22 between the open and closed states.

The bearing arrangement 110 or liner 101 of the conduit 10 may be supported by an elastically resilient member. The elastically resilient member enables downward movement of the inner sleeve 22 in response to bending loads applied to the conduit 10 from above, such as from errant vehicles accidentally driving over the pavement 8, thereby protecting the conduit 10.

In the embodiment shown in Figure 8, the elastically resilient member takes the form of a cradle 114, on which the bearing arrangement 110 is mounted. The cradle incorporates springs 116 to provide the elastic resilience to the cradle 114. An advantage of providing the elastically resilient member as a sprung cradle 114 is that cleaning of the arrangement is made easier and small debris, such as pieces of grit or stone can be worked free from the slot 102 during maintenance.

Alternatively, the elastically resilient member may be provided as an elastomeric support member that can compress in the same manner as the springs 116 shown in Figure 8. The elastomeric support member may be used in combination with a liner 101 or with a bearing arrangement 110. A bump stop 118 may also be included underneath the elastically resilient member to limit the downwards movement of the inner sleeve 22. Like the bearing arrangement 110 and the cradle 114, when the conduit 10 comprises an elastically resilient member in the form of an elastomeric support member, the elastomeric support member can be provided as a single member extending along the length of the conduit 10 along the longitudinal axis L or as a series of individual elastomeric support members spaced along the length of the conduit 10.

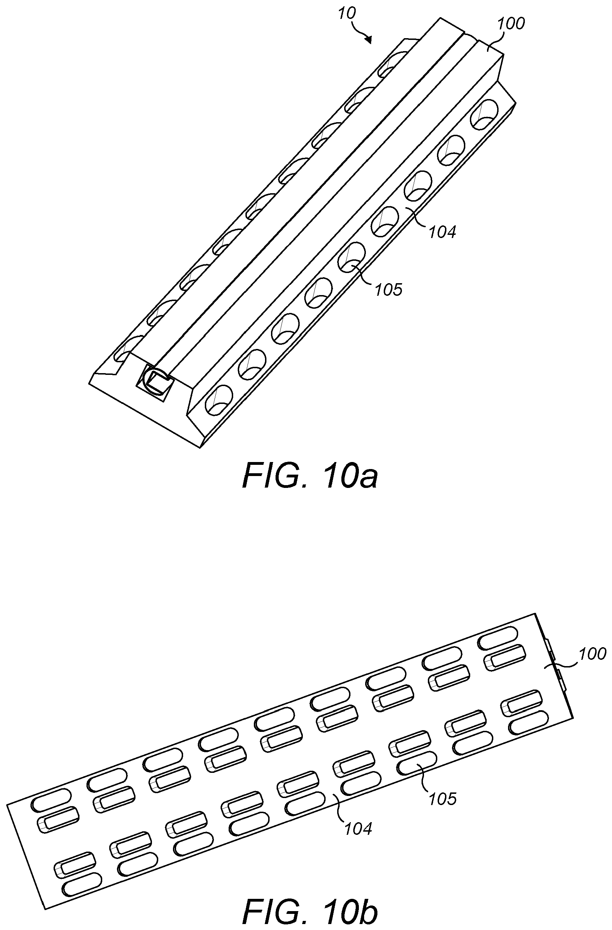

In both the embodiment shown in Figures 7 and 8, weight and material can be saved by selectively removing portions of the skirt 104 of the base structure 100. For example, the skirt 104 may be entirely removed from the conduit 10 at certain sections along the length of the arrangement to effectively provide a longitudinal series of skirt sections 104a, 104b, 104c, with gaps in between, as shown in the plan view of Figure 9. Alternatively, the material can be removed by creating a series of cavities 105 in the skirt 104, as shown in Figures 10a and 10b. The cavities 105 extend throughout the height of the skirt 104 in Figures 10a and 10b to form open bores, but could also only extend part-way through the skirt 104 to form blind bores.

The first open channel 18 may additionally provide a drainage channel to help prevent the charging cable 12 from being submerged and damaged by rainwater that enters the conduit 10.

Many modifications may be made to the specific examples described above without departing from the scope of the invention as defined in the accompanying claims.

## Claims

1. An arrangement for providing a charging connection for an electric vehicle (6), the arrangement comprising:
an elongate groove (30) formed in a surface of a pavement or sidewalk (8); and
a conduit (10) received within the elongate groove (30), the conduit (10) comprising:
an outer sleeve (16) comprising a first open channel (18) defining a first longitudinal aperture (20); and
an inner sleeve (22) arranged within the first open channel (18), the inner sleeve (22) comprising a second open channel (24) for receiving a vehicle charging cable (12), the second open channel (24) defining a second longitudinal aperture (26),
the conduit (10) having an open state and a closed state,
wherein in the open state the first and second longitudinal apertures (20, 26) are mutually aligned so that the conduit (10) defines an opening (32) at the surface of the pavement or sidewalk (8), through which at least a portion of the vehicle charging cable (12) may be inserted into the second open channel (24) of the conduit (10), and in the closed state an exposed surface of the conduit (10) at the surface of the pavement or sidewalk (8) covers the vehicle charging cable (12), and
**characterised in that** the inner sleeve (22) is rotatable within the outer sleeve (16) to move the conduit (10) between the open and closed states.

2. The arrangement of Claim 1, wherein the exposed surface of the conduit (10) is a surface of the inner sleeve (22).

3. The arrangement of Claim 1 or Claim 2, wherein the exposed surface of the conduit (10) is substantially flush with the surface of the pavement or sidewalk (8) when the conduit (10) is in the closed state.

4. The arrangement of any preceding claim, wherein the inner sleeve (22) rests against a bearing arrangement (110) in the outer sleeve (16), wherein the bearing arrangement (110) optionally comprises roller bearings (112) against which the inner sleeve (22) rotates to move the conduit (10) between the open and closed states.

5. The arrangement of any preceding claim, wherein the inner sleeve (22) is supported by an elastically resilient member, wherein the elastically resilient member optionally comprises a spring (116) or an elastomeric material.

6. The arrangement of any preceding claim, wherein the conduit (10) comprises a base structure (100) received within the groove, wherein the outer sleeve (16) is optionally formed integrally with the base structure (100).

7. The arrangement of Claim 6, wherein the base structure (100) is formed from rubber or another resiliently deformable material.

8. The arrangement of Claim 6 or Claim 7, wherein the base structure (100) comprises an outwardly-extending skirt (104), and wherein the skirt (104) is covered by an infill (106).

9. The arrangement of any preceding claim, wherein the groove (30) and the conduit (10) extend transversely across the width of the pavement or sidewalk (8), optionally wherein the groove (30) and the conduit (10) extend between a domestic residence (5) on one side of the pavement or sidewalk (8) and a road (4) providing on-street parking on the other side of the pavement or sidewalk (8).

10. The arrangement of any preceding claim, wherein the outer and/or the inner sleeve (16, 22) of the conduit (10) are extruded parts.

11. The arrangement of any preceding claim, wherein the outer and/or the inner sleeve (16, 22) of the conduit (10) are made of plastic, metal, or a composite material such as fibre-reinforced polymer.

12. A method of installing the arrangement of any of Claims 1 to 11, the method comprising:
forming an elongate groove (30) within a pavement or sidewalk (8); and
providing a conduit (10) in said groove (30), the conduit (10) comprising:
an outer sleeve (16) comprising a first open channel (18) defining a first longitudinal aperture (20); and
an inner sleeve (22) arranged within the first open channel (18), the inner sleeve (22) comprising a second open channel (24) for receiving a vehicle charging cable (12), the second open channel (24) defining a second longitudinal aperture (26);
**characterised in that** the inner sleeve (22) is rotatable within the outer sleeve (16) to move the conduit (10) between open and closed states, and wherein the first and second longitudinal apertures (20, 26) are mutually aligned when the conduit (10) is in the open state.

13. The method of Claim 12, wherein the conduit (10) further comprises a base structure (100) and wherein the method comprises:
installing the base structure (100) within the groove (30);
subsequently installing the inner sleeve (22) within the base structure (100).

14. A method for charging an electric vehicle (6) using the arrangement of any of Claims 1 to 11, the method comprising:
providing a charging cable (12);
rotating the inner sleeve (22) of the conduit (10) within the outer sleeve (16) of the conduit (10) to move the conduit (10) to the open state and reveal the opening (32) defined at the surface of the pavement or sidewalk (8) by mutual alignment of the first and second longitudinal apertures (20, 26);
inserting a portion of the charging cable (12) into the second open channel (24) of the conduit (10) through the opening (32);
closing the conduit (10) by rotating the inner sleeve (22) within the outer sleeve (16) such that an exposed surface of the conduit (10) at the surface of the pavement or sidewalk (8) covers said portion of the charging cable (12);
connecting a first end of the vehicle charging cable (12) to a power supply (14);
and
connecting a second end of the charging cable (12) to the electric vehicle (6).

15. The method of Claim 14, wherein the power supply (14) is a domestic power supply, and optionally wherein the electric vehicle (6) is parked on a road (4).

## Patentansprüche

1. Anordnung zur Bereitstellung einer Ladeverbindung für ein Elektrofahrzeug (6), wobei die Anordnung Folgendes umfasst:
eine längliche Rille (30), die in einer Oberfläche einer Fahrbahn oder eines Gehwegs (8) ausgebildet ist; und
eine in der länglichen Rille (30) aufgenommene Leitungsröhre (10), wobei die Leitungsröhre (10) Folgendes umfasst:
eine Außenhülse (16) mit einem ersten offenen Kanal (18), der eine erste Längsapertur (20) definiert; und
eine Innenhülse (22), die innerhalb des ersten offenen Kanals (18) angeordnet ist, wobei die Innenhülse (22) einen zweiten offenen Kanal (24) zur Aufnahme eines Fahrzeugladekabels (12) umfasst, wobei der zweite offene Kanal (24) eine zweite Längsapertur (26) definiert,
wobei die Leitungsröhre (10) einen offenen Zustand und einen geschlossenen Zustand hat,
wobei im offenen Zustand die erste und zweite Längsapertur (20, 26) aufeinander ausgerichtet sind, so dass die Leitungsröhre (10) eine Öffnung (32) an der Oberfläche der Fahrbahn oder des Gehwegs (8) definiert, durch die zumindest ein Teil des Fahrzeugladekabels (12) in den zweiten offenen Kanal (24) der Leitungsröhre (10) eingeführt werden kann, und im geschlossenen Zustand eine exponierte Oberfläche der Leitungsröhre (10) an der Oberfläche der Fahrbahn oder des Gehwegs (8) das Fahrzeugladekabel (12) abdeckt, und
**dadurch gekennzeichnet, dass** die Innenhülse (22) innerhalb der Außenhülse (16) drehbar ist, um die Leitungsröhre (10) zwischen dem offenen und dem geschlossenen Zustand zu bewegen.

2. Anordnung nach Anspruch 1, wobei die exponierte Oberfläche der Leitungsröhre (10) eine Oberfläche der Innenhülse (22) ist.

3. Anordnung nach Anspruch 1 oder Anspruch 2, wobei die exponierte Oberfläche der Leitungsröhre (10) im Wesentlichen bündig mit der Oberfläche der Fahrbahn oder des Gehwegs (8) ist, wenn die Leitungsröhre (10) im geschlossenen Zustand ist.

4. Anordnung nach einem vorherigen Anspruch, wobei die Innenhülse (22) an einer Lageranordnung (110) in der Außenhülse (16) anliegt, wobei die Lageranordnung (110) optional Rollenlager (112) umfasst, an denen sich die Innenhülse (22) dreht, um die Leitungsröhre (10) zwischen dem offenen und dem geschlossenen Zustand zu bewegen.

5. Anordnung nach einem vorherigen Anspruch, wobei die Innenhülse (22) von einem elastisch nachgiebigen Element getragen wird, wobei das elastisch nachgiebige Element optional eine Feder (116) oder ein elastomeres Material umfasst.

6. Anordnung nach einem vorherigen Anspruch, wobei die Leitungsröhre (10) eine in der Rille aufgenommene Basisstruktur (100) umfasst, wobei die Außenhülse (16) optional einstückig mit der Basisstruktur (100) ausgebildet ist.

7. Anordnung nach Anspruch 6, wobei die Basisstruktur (100) aus Gummi oder einem anderen elastisch verformbaren Material gebildet ist.

8. Anordnung nach Anspruch 6 oder Anspruch 7, wobei die Basisstruktur (100) eine nach außen ragende Schürze (104) umfasst und wobei die Schürze (104) von einer Füllung (106) bedeckt ist.

9. Anordnung nach einem vorherigen Anspruch, wobei sich die Rille (30) und die Leitungsröhre (10) transversal über die Breite der Fahrbahn oder des Gehwegs (8) erstrecken, wobei sich die Rille (30) und die Leitungsröhre (10) optional zwischen einem Wohnsitz (5) auf einer Seite der Fahrbahn oder des Gehwegs (8) und einer Straße (4) erstrecken, die auf der anderen Seite der Fahrbahn oder des Gehwegs (8) Parkplätze am Straßenrand bietet.

10. Anordnung nach einem vorherigen Anspruch, wobei die Außen- und/oder Innenhülse (16, 22) der Leitungsröhre (10) extrudierte Teile sind.

11. Anordnung nach einem vorherigen Anspruch, wobei die Außen- und/oder die Innenhülse (16, 22) der Leitungsröhre (10) aus Kunststoff, Metall oder einem Verbundwerkstoff wie faserverstärktem Polymer bestehen.

12. Verfahren zum Installieren der Anordnung nach einem der Ansprüche 1 bis 11, wobei das Verfahren Folgendes beinhaltet:
Ausbilden einer länglichen Rille (30) in einer Fahrbahn oder einem Gehweg (8); und
Vorsehen einer Leitungsröhre (10) in der genannten Rille (30), wobei die Leitungsröhre (10) Folgendes umfasst:
eine Außenhülse (16) mit einem ersten offenen Kanal (18), der eine erste Längsapertur (20) definiert; und
eine Innenhülse (22), die innerhalb des ersten offenen Kanals (18) angeordnet ist, wobei die Innenhülse (22) einen zweiten offenen Kanal (24) zur Aufnahme eines Fahrzeugladekabels (12) umfasst, wobei der zweite offene Kanal (24) eine zweite Längsapertur (26) definiert;
**dadurch gekennzeichnet, dass** die Innenhülse (22) innerhalb der Außenhülse (16) drehbar ist, um die Leitungsröhre (10) zwischen einem offenen und einem geschlossenen Zustand zu bewegen, und wobei die erste und zweite Längsapertur (20, 26) aufeinander ausgerichtet sind, wenn die Leitungsröhre (10) im offenen Zustand ist.

13. Verfahren nach Anspruch 12, wobei die Leitungsröhre (10) ferner eine Basisstruktur (100) umfasst und wobei das Verfahren Folgendes beinhaltet:
Installieren der Basisstruktur (100) in der Rille (30);
anschließendes Installieren der Innenhülse (22) in der Basisstruktur (100).

14. Verfahren zum Laden eines Elektrofahrzeugs (6) mit Hilfe der Anordnung nach einem der Ansprüche 1 bis 11, wobei das Verfahren Folgendes beinhaltet:
Bereitstellen eines Ladekabels (12);
Drehen der Innenhülse (22) der Leitungsröhre (10) innerhalb der Außenhülse (16) der Leitungsröhre (10), um die Leitungsröhre (10) in den offenen Zustand zu bewegen und die an der Oberfläche der Fahrbahn oder des Gehwegs (8) definierte Öffnung (32) durch gegenseitiges Ausrichten der ersten und zweiten Längsaperturen (20, 26) freizulegen;
Einführen eines Abschnitts des Ladekabels (12) in den zweiten offenen Kanal (24) der Leitungsröhre (10) durch die Öffnung (32);
Schließen der Leitungsröhre (10) durch Drehen der Innenhülse (22) innerhalb der Außenhülse (16), so dass eine exponierte Oberfläche der Leitungsröhre (10) an der Oberfläche der Fahrbahn oder des Gehwegs (8) den genannten Abschnitt des Ladekabels (12) abdeckt;
Anschließen eines ersten Endes des Fahrzeugladekabels (12) an eine Stromversorgung (14); und
Anschließen eines zweiten Endes des Ladekabels (12) an das Elektrofahrzeug (6).

15. Verfahren nach Anspruch 14, wobei die Stromversorgung (14) eine Haushaltsstromversorgung ist und wobei das Elektrofahrzeug (6) optional auf einer Straße (4) geparkt ist.

## Revendications

1. Agencement destiné à fournir une connexion de charge pour un véhicule électrique (6), l'agencement comprenant :
une rainure (30) allongée formée dans une surface d'un trottoir ou d'une bande piétonne (8) ; et
une conduite (10) reçue au sein de la rainure (30) allongée, la conduite (10) comprenant :
un manchon externe (16) comprenant un premier canal ouvert (18) définissant un premier orifice longitudinal (20) ; et
un manchon interne (22) agencé au sein du premier canal ouvert (18), le manchon interne (22) comprenant un deuxième canal ouvert (24) destiné à recevoir un câble de charge (12) de véhicule, le deuxième canal ouvert (24) définissant un deuxième orifice longitudinal (26),
la conduite (10) ayant un état ouvert et un état fermé,
dans lequel dans l'état ouvert les premier et deuxième orifices longitudinaux (20, 26) sont mutuellement alignés de sorte que la conduite (10) définit une ouverture (32) à la surface du trottoir ou de la bande piétonne (8), à travers laquelle au moins une portion du câble de charge (12) de véhicule peut être insérée dans le deuxième canal ouvert (24) de la conduite (10), et dans l'état fermé une surface exposée de la conduite (10) à la surface du trottoir ou de la bande piétonne (8) recouvre le câble de charge (12) de véhicule, et
**caractérisé en ce que** le manchon interne (22) est capable de tourner au sein du manchon externe (16) pour déplacer la conduite (10) entre les états ouvert et fermé.

2. Agencement selon la revendication 1, dans lequel la surface exposée de la conduite (10) est une surface du manchon interne (22).

3. Agencement selon la revendication 1 ou la revendication 2, dans lequel la surface exposée de la conduite (10) est sensiblement de niveau avec la surface du trottoir ou de la bande piétonne (8) lorsque la conduite (10) est dans l'état fermé.

4. Agencement selon l'une quelconque des revendications précédentes, dans lequel le manchon interne (22) repose contre un agencement de palier (110) dans le manchon externe (16), dans lequel l'agencement de palier (110) comprend éventuellement des butées à rouleaux (112) contre lesquelles le manchon interne (22) tourne pour déplacer la conduite (10) entre les états ouvert et fermé.

5. Agencement selon l'une quelconque des revendications précédentes, dans lequel le manchon interne (22) est supporté par un organe élastiquement résilient, dans lequel l'organe élastiquement résilient comprend éventuellement un ressort (116) ou un matériau élastomère.

6. Agencement selon l'une quelconque des revendications précédentes, dans lequel la conduite (10) comprend une structure de base (100) reçue au sein de la rainure, dans lequel le manchon externe (16) est éventuellement formé d'un seul tenant avec la structure de base (100).

7. Agencement selon la revendication 6, dans lequel la structure de base (100) est formée à partir de caoutchouc ou d'un autre matériau déformable à résilience.

8. Agencement selon la revendication 6 ou la revendication 7, dans lequel la structure de base (100) comprend une jupe (104) en extension vers l'extérieur, et dans lequel la jupe (104) est recouverte par un élément de remplissage (106).

9. Agencement selon l'une quelconque des revendications précédentes, dans lequel la rainure (30) et la conduite (10) s'étendent transversalement en travers de la largeur du trottoir ou de la bande piétonne (8), éventuellement dans lequel la rainure (30) et la conduite (10) s'étendent entre une résidence domestique (5) sur un côté du trottoir ou de la bande piétonne (8) et une chaussée (4) fournissant un stationnement sur voirie sur l'autre côté du trottoir ou de la bande piétonne (8).

10. Agencement selon l'une quelconque des revendications précédentes, dans lequel le manchon externe et/ou le manchon interne (16, 22) de la conduite (10) sont des pièces extrudées.

11. Agencement selon l'une quelconque des revendications précédentes, dans lequel le manchon externe et/ou le manchon interne (16, 22) de la conduite (10) sont constitués de plastique, de métal, ou d'un matériau composite tel qu'un polymère renforcé de fibres.

12. Procédé d'installation de l'agencement de l'une quelconque des revendications 1 à 11, le procédé comprenant :
la formation d'une rainure (30) allongée au sein d'un trottoir ou d'une bande piétonne (8) ; et
la fourniture d'une conduite (10) dans ladite rainure (30), la conduite (10) comprenant :
un manchon externe (16) comprenant un premier canal ouvert (18) définissant un premier orifice longitudinal (20) ; et
un manchon interne (22) agencé au sein du premier canal ouvert (18), le manchon interne (22) comprenant un deuxième canal ouvert (24) destiné à recevoir un câble de charge (12) de véhicule, le deuxième canal ouvert (24) définissant un deuxième orifice longitudinal (26) ;
**caractérisé en ce que** le manchon interne (22) est capable de tourner au sein du manchon externe (16) pour déplacer la conduite (10) entre des états ouvert et fermé, et dans lequel les premier et deuxième orifices longitudinaux (20, 26) sont mutuellement alignés lorsque la conduite (10) est dans l'état ouvert.

13. Procédé selon la revendication 12, dans lequel la conduite (10) comprend en outre une structure de base (100) et dans lequel le procédé comprend :
l'installation de la structure de base (100) au sein de la rainure (30) ;
ultérieurement, l'installation du manchon interne (22) au sein de la structure de base (100).

14. Procédé de charge d'un véhicule électrique (6) à l'aide de l'agencement de l'une quelconque des revendications 1 à 11, le procédé comprenant :
la fourniture d'un câble de charge (12) ;
la rotation du manchon interne (22) de la conduite (10) au sein du manchon externe (16) de la conduite (10) pour déplacer la conduite (10) jusqu'à l'état ouvert et découvrir l'ouverture (32) définie à la surface du trottoir ou de la bande piétonne (8) par alignement mutuel des premier et deuxième orifices longitudinaux (20, 26) ;
l'insertion d'une portion du câble de charge (12) dans le deuxième canal ouvert (24) de la conduite (10) à travers l'ouverture (32) ;
la fermeture de la conduite (10) par rotation du manchon interne (22) au sein du manchon externe (16) de telle sorte qu'une surface exposée de la conduite (10) à la surface du trottoir ou de la bande piétonne (8) recouvre ladite portion du câble de charge (12) ;
la connexion d'une première extrémité du câble de charge (12) de véhicule à une alimentation en puissance (14) ; et
la connexion d'une deuxième extrémité du câble de charge (12) au véhicule électrique (6).

15. Procédé selon la revendication 14, dans lequel l'alimentation en puissance (14) est une alimentation en puissance domestique, et éventuellement dans lequel le véhicule électrique (6) est garé sur une chaussée (4).
